# EUROPEAN PATENT APPLICATION

(11) **EP 1 313 063 A2**
(43) Date of publication of application: **21.05.2003**
(21) Application number: 02023675.8
(22) Date of filing: 22.10.2002
(51) Int. Cl.: G06K 19/073, G06K 19/07

(54) **Combination contact/contactless IC card**

(30) Priority: 24.10.2001 JP 2001326761
(71) Applicant: Kabushiki Kaisha Toshiba, Tokyo 105-8001 (JP)
(72) Inventor: Yagi, Hideki, Toshiba Corporation, Minato-ku, Tokyo (JP); Hasebe, Shinichi, Toshiba Corporation, Minato-ku, Tokyo (JP)
(74) Representative: HOFFMANN - EITLE

(57) **Abstract**

A semiconductor integrated circuit including a first interface circuit, a second interface circuit, a switching circuit. The first interface circuit output a low-level contact mode signal when no power supply voltage is supplied, and to output a high-level contact mode signal when a power supply voltage is supplied. The second interface circuit to output a low-level wireless mode signal when no power supply voltage is supplied, and to output a high-level wireless mode signal when a power supply voltage is supplied. The switching circuit to switch a communication mode to a contact mode in the case of the high-level contact mode signal and the low-level wireless mode detecting signal, and to switch the communication mode to a wireless mode in the case of the low-level contact mode signal and the high-level wireless mode signal.

## Description

### FIELD OF THE INVENTION

This invention relate to a semiconductor integrated circuit, memory card, for example combination of contact type and wireless type, having the semiconductor circuit and method of using the memory card.

### BACKGROUND OF THE ART

Integrated circuit (IC) cards, contact IC cards and wireless IC cards (wireless IC cards) are conventionally known. Because contact IC cards do not operate until being inserted into a reader/writer, a high security level can be expected. However, since contact IC cards need to be inserted into a reader/writer, there are drawbacks in that using contact IC cards is troublesome and total time required for processing is long. Meanwhile, wireless IC cards enable communications only by being brought proximity to a reader/writer, thus having an advantage in that the total time required for processing can be shortened. However, wireless IC cards also have drawbacks in that, when wireless IC cards are brought close to a reader/writer, communications are inevitably carried out, whether or not desired. Consequently, a combination card has been recently developed, in which functions of both of the above described IC cards, that is, a contact mode and a wireless frequency (hereinafter referred to as wireless) mode are mounted on a single card.

However, the contact mode and wireless frequency mode of the combination card are separated according to each application. Thus, there have been has been problems caused by illegal intruders, such as hackers, who perform analysis by intercepting communications mode-by-mode, and can easily perform the analysis.

### SUMARY OF THE INVENTION

An object of the present invention is to provide a combination card and a method of using the same, the combination card enabling separate usages of communication systems thereof according to importance of security, importance of shortening of communication processing time, importance of easy communication actions, frequency of the communication actions and the like. Moreover, another object of the present invention is to provide an LSI for a combination card, a combination card and a method of using the combination card. Specifically, the LSI for a combination card enables communications by using both of the contact mode and the RADIO mode, encryption of transmitted/received data and communications of a high security level.

A semiconductor integrated circuit includes: a first interface circuit to output a low-level contact mode signal when no power supply voltage is supplied, and to output a high-level contact mode signal when a power supply voltage is supplied; a second interface circuit to output a low-level wireless mode signal when no power supply voltage is supplied, and to output a high-level wireless mode signal when a power supply voltage is supplied; a switching circuit to switch a communication mode to a contact mode in the case of the high-level contact mode signal and the low-level wireless mode detecting signal, and to switch the communication mode to a wireless mode in the case of the low-level contact mode signal and the high-level wireless mode signal; a CPU to execute a processing program of the wireless mode in the wireless mode and to execute a processing program of the contact mode in the contact mode, according to the communication mode of the switching circuit; a memory circuit to store predetermined data; and an encoder circuit to encode the predetermined data held in the memory according to the wireless mode or the contact mode of the switching circuit.

Other features and advantages of the present invention will become apparent from the following detailed description. It should be understood, however, that the detailed description and specific examples, while describing embodiments of the invention, are given by way of illustration only, since various changes and modifications within the spirit and scope of the invention will become apparent to those skilled in the art from this detailed description. Accordingly the scope of the invention is defined by appealed claims.

### BRIEF DESCRIPTION OF THE DRAWINGS

The accompanying drawings, which are incorporated in and constitute a part of this specification, illustrate several embodiments and, together with the description, serve to explain the principles of the invention. A more complete appreciation of the present invention and many of its attendant advantages will be readily obtained by reference to the following detailed description considered in connection with the accompanying drawings, in which:
Fig. 1 is a block diagram of a system utilize a contact reader/writer, a wireless reader/writer, a memory card according to the present invention;
Fig. 2 is a block diagram of semiconductor chip of provided on memory card according to the present invention;
Fig. 3 is a plan view of a building adapted for using a combination card according to the present invention;
Fig. 4 is a flow chart illustrating the steps in a method of using combination card according to the present invention;
Fig. 5 is a block diagram of a system utilize a contact reader/writer, a wireless reader/writer, a memory card according to the present invention
Fig. 6 is a block diagram of a memory card according to the present invention.
Fig. 7 is a flow chart view illustrating the step in a method of using a memory card according to the present invention.

### DETAILED DESCRIPTION OF THE EMBODIMENTS

Next, the embodiments of the present invention will be described with reference to the drawings. In the description of the drawings below, the same or similar portions are denoted by the same or similar reference numerals.

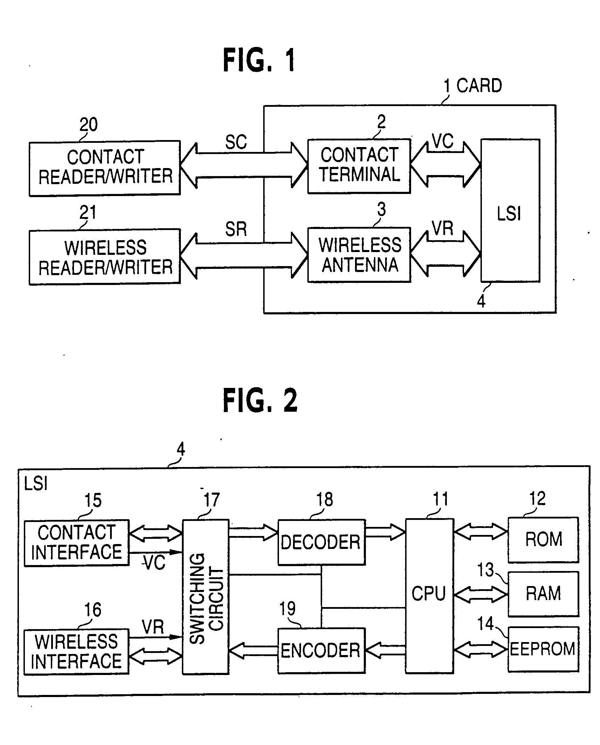

Fig. 1 is block diagram of a combination card 1 according to a first embodiment of the present invention. In this embodiment, the combination card is a combination memory card including both a contact type circuit and a wireless type circuit. As shown in Fig. 1, on combination card 1 of the present invention, contact terminal 2, a wireless antenna terminal 3 and LSI (semiconductor integrated circuit) 4 are mounted. Wireless antenna terminal 3 comprises coil. The coil can be placed any place in card 1, for example, surrounding wireless antenna terminal 3 or peripheral portion of the card 1. In this embodiment, the coil is mounted in wireless antenna terminal 3. Although not shown in the drawing, contact terminal 2 includes a number of external terminals (electrodes), such as a clock (CLOCK) terminal, a reset (RESET) terminal, a power source (VDD) terminal, a ground (GND) terminal and an input/output (I/O) terminal. Contact terminal 2 permites transmission/reception of various types of data SC and power supply voltage VC by contacting those external terminals directly with a contact reader/writer 20. Wireless antenna terminal 3 is for executing transmission/reception of data with wireless reader/writer 21, and for obtaining signal SR from wireless reader/writer 21 and converting to power supply voltage VR.

Fig. 2 shows an internal arrangement of semiconductor chip 4, shown in Fig.1, for a combination card according to a first embodiment of the present invention. As shown in Fig. 2, semiconductor chip 4 includes a contact-type interface 15 for inputting/outputting various data, which is connected to the contact terminal 2; a wireless interface 16 for inputting/outputting various data, which is connected to wireless antenna terminal 3; a switching circuit 17 for switching communication modes, which is connected to contact interface 15 and wireless interface 16; a central processing unit (CPU) 11; a decoder circuit 18; and an encoder circuit 19. Contact interface 15 generates a low-level contact mode detecting signal (VC) = L or a high-level contact mode detecting signal (VC) = H in accordance with a potential level of a power supply voltage, and outputs any of the signals to the switching circuit 17. A contact mode detecting signal (VC) is the low-level contact mode detecting signal (VC) = L when no power supply voltage is supplied to the LSI chip 4, but is switched to the high-level contact mode detecting signal (VC) = H when the power supply voltage is supplied from the contact reader/writer 20 via the contact terminal 2, and the potential level thereof has reached a predetermined threshold value. Power voltage supply is depending on standardized system in which contact reader/writer 20 is included. In general, power voltage supply is, for example, 5V, 3V or 1.8V. So it is preferable to set the predetermined threshold value below the power supply voltage. Note that, although not shown in the drawing, the contact interface 15 is connected to respective terminal pads (bonding pads) such as a clock (CLOCK) terminal pad, a reset (RESET) terminal pad, a power source (VDD) terminal pad, a ground (GND) terminal pad and an input/output (I/O) terminal pad. With respect to each circuit block inside LSI 4, the contact interface 15 permits transmission/reception of various data and signals to/from an external device (reader/writer) and a power source supplies to LSI 4. The wireless interface 16 generates a low-level wireless mode detecting signal (VR) = L or a high-level wireless mode detecting signal (VR) = H depending on a power supply voltage, and outputs any of the signals to the switching circuit 17. Wireless reader/writer 21 send wireless signal, then wireless antenna 3 convert the wireless signal to voltage. We use the voltage as power supply voltage VR for wireless interface circuit 16.

A wireless mode detecting signal (VR) is the low-level wireless mode detecting signal (VR) = L when no power supply voltage is supplied to the LSI chip 4, but is switched to the high-level wireless mode detecting signal (VR) = H when the power supply voltage is supplied from the wireless reader/writer 21 via a wireless antenna terminal 3 and the wireless interface 16, and the voltage level thereof has reached a predetermined threshold value, normally the predetermined value is lower than maximum voltage of VR. Specifically, when the power supply voltage is supplied from the wireless reader/writer 21 via the wireless antenna terminal 3 and wireless interface 16, and the potential level thereof has reached a predetermined threshold value, a wireless wave signal (AC signal) for power source, which is received via wireless antenna terminal 3, is subjected to half-wave or full-wave rectification, and a power source potential (DC power) is generated. The switching circuit 17 performs switching between the wireless mode and the contact mode in accordance with the contact mode detecting signal (VC) and the wireless mode detecting signal (VR) which are output from the contact interface 15 and wireless interface 16 respectively. In the case where the high-level contact mode detecting signal (VC) = H and the low-level wireless mode detecting signal (VR) = L, the communication mode is switched to the contact mode. In the case where the low-level contact mode detecting signal (VC) = L and the high-level wireless mode detecting signal (VR) = H, the communication mode is switched to the wireless mode. In the wireless mode case, transmission and reception of data is performed between the wireless interface 16 and the CPU 11. In the case of the contact mode, transmission and reception of data is performed between the contact interface 15 and the CPU 11. The CPU 11 is a processing unit for processing various signals and executes processing programs according to the communications mode of the switching circuit 17. In the case of the wireless mode, a processing program for the wireless mode, which is stored in a ROM 12, is executed; meanwhile, in the case of the contact mode, a processing program for the contact mode, which is stored in the ROM 12, is executed. The CPU 11 also includes control means for controlling inputs and outputs of the ROM 12, a RAM 13, an EEPROM 14, the decoder circuit 18, the encoder circuit 19 respectively. The decoder circuit 18 is a circuit for decoding various encoded data. The encoder circuit 19 is a circuit for encoding various data such as ID data in accordance with the wireless mode of the switching circuit 17 or the contact mode thereof, the ID data being held in a memory such as the EEPROM 14.

Furthermore, as shown in Fig. 2, LSI 4 includes a ROM 12 functions as a program memory for storing programs executed by CPU 11 and has programmed data processing methods corresponding to the respective modes (the contact mode and the wireless mode); RAM 13 functions as a data memory for storing data utilized during the process of program execution and being used as a working area, and which is used for temporarily storing data; and EEPROM 14 used as a data storage memory storing ID data for identifying the combination card 1.

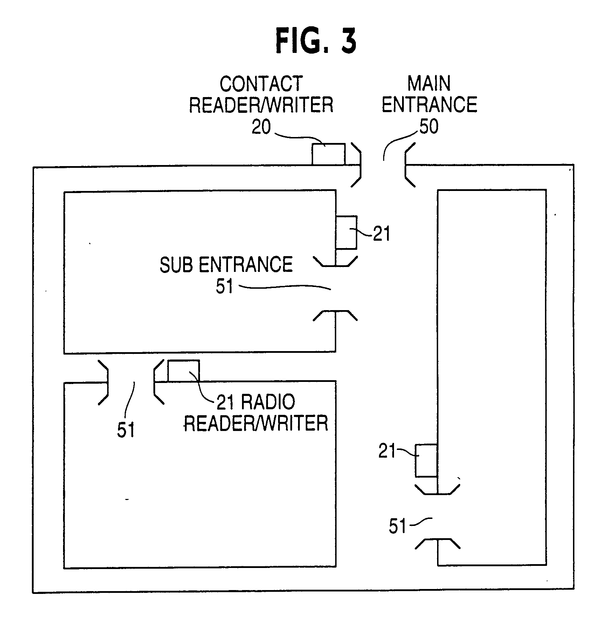

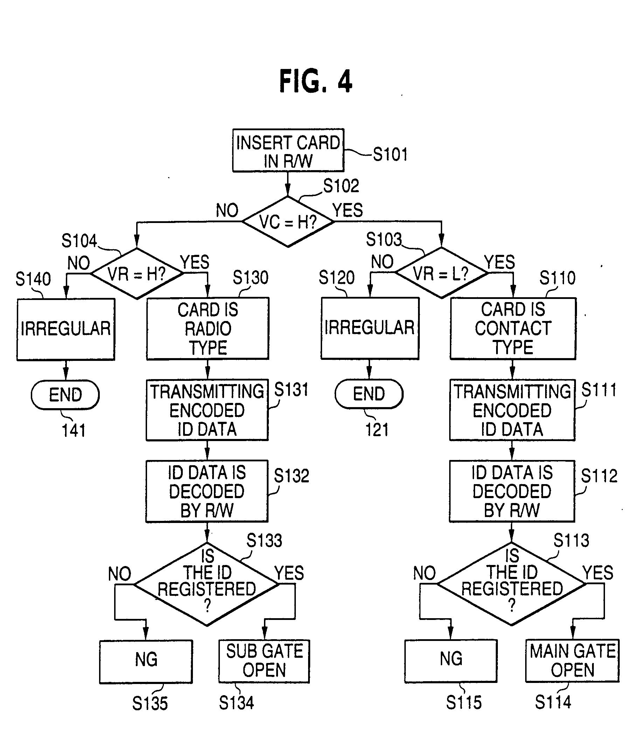

Next, description a method of using the combination card according to a first embodiment of the present invention is described referring to Fig. 3 and Fig. 4.

Fig. 3 is a view showing an example of using the combination card according to a first embodiment of the present invention in a gate system for buildings . As shown in Fig. 3, there is a main entrance 50 at an entrance of the building, and there are sub entrances at entrances to respective floors in the building. The contact reader/writer 20 is located to the main entrance 50. By communicating with the combination card 1, the contact reader/writer 20 performs opening/closing of a gate or door of the main entrance 50 in accordance with the respective modes (the contact mode and the wireless mode). The wireless reader/writer 21 is located to each sub entrance 51. By communicating with the combination card 1, the wireless reader/writer 21 performs opening/closing of a sub gate or door of the sub entrance 51 in accordance with the respective modes. In the first embodiment of the present invention, description will be given for a case where, in the opening/closing of the gate of the main entrance, the contact reader/writer with a high security level is used to certify the combination card, and in the opening/closing of the gate of the sub entrance inside the building, the wireless reader/writer high in convenience is used to certify the combination card.

Referring now to Fig.4, in step S101, a user first inserts the combination card 1 into the contact reader/writer 20 provided at the main entrance when entering the building. If the user has already passed the main entrance and entered the building, the user brings the combination card 1 closer to the wireless reader/writer 21 provided at the sub entrance in the building. Then, when the combination card 1 is inserted into the contact reader/writer 20, a power supply voltage is supplied to the combination card 1 via the contact terminal 2 and the contact I/F 15, and the contact I/F 15 outputs the high-level contact mode detecting signal (VC) = H to the switching circuit 17. On the other hand, when the combination card 1 is brought closer to the wireless reader/writer 21, a power supply voltage is supplied to the combination card 1 via the wireless antenna terminal 2 and the wireless I/F 16, and the wireless I/F 16 outputs the high-level wireless mode detecting signal (VR) = H to the switching circuit 17.

In step S102, the switching circuit 17 of the combination card 1 judges whether or not a contact mode detecting signal (VC) output from the contact I/F 15 is the high-level contact mode detecting signal (VC) = H. When the contact mode detecting signal (VC) is judged to be the high-level contact mode detecting signal (VC) = H(YES) in this step, processing advances to step S103.

Next, in step S103, the combination card 1 judges whether or not a wireless mode detecting signal (VR) output from the wireless I/F 16 is the low-level wireless mode detecting signal (VR) = L(NO). If the wireless mode detecting signal (VR) is judged not to be the low-level wireless mode detecting signal (VR) = L (that is, the wireless mode detecting signal (VR) is judged to be the high-level wireless mode detecting signal (VR) = H) in this step, the processing advances to step S120. In the step S120, in response to the detecting signals of the high-level contact mode detecting signal (VC) = H and the high-level wireless mode detecting signal (VR) = H, the combination card 1 falls into a prohibition state "Error", that is, the combination card 1 is recognized to be irregular. Accordingly, the processing is terminated.(Step121-End)

When the wireless mode detecting signal (VR) is judged to be the low-level wireless mode detecting signal (VR) = L(YES) in step S103, the processing advances to step S110. In step S110, in response to the detecting signals of the high-level contact mode detecting signal (VC) = H and the low-level wireless mode detecting signal (VR) = L, the switching circuit 17 of the combination card 1 performs switching from the current mode to the contact mode with respect to CPU 11. Thus, CPU 11 performs data processing according to the processing program in the contact mode, which is stored in ROM 12. Each of the respective circuit blocks 12, 13, 14, 18, 19,... performs a processing operation in the contact mode.

In step S111, the encoder circuit 19 of the combination card 1 encodes ID data held in the EEPROM 14 of the combination card 1. Then, the combination card 1 transmits the encoded ID data to contact reader/writer 20 via contact I/F 15 and contact terminal 2.

In step S112, upon reception of the encoded ID data from the combination card 1, the contact reader/writer 20 decodes the encoded ID data.

Then, in step S113, the contact reader/writer 20 judges whether or not the decoded ID data is already registered ID data.

If the decoded ID data is judged not to be the already registered ID data in step S113(NO), the processing advances to step S115. In the step S115, by ringing a buzzer while keeping the entrance gate locked, the contact reader/writer 20 informs that the decoded ID data is irregular ID data.

If the decoded ID data is judged to be previously registered ID data in step S113(YES), the processing advances to step S114. In the step S114, the contact reader/writer 20 unlocks the gate of the main entrance 50.

Meanwhile, if the contact mode detecting signal (VC) is judged not to be the high-level contact mode detecting signal (VC) = H (that is, the contact mode detecting signal (VC) is judged to be the low-level contact mode detecting signal (VC) = L) in step S102(NO), the processing advances to step S104.

Next, in step S104, the combination card 1 judges whether or not the wireless mode detecting signal (VR) is the high-level wireless mode detecting signal (VR) = H.

If the wireless mode detecting signal (VR) is judged not to be the high-level wireless mode detecting signal (VR) = H, that is, judged to be the low-level wireless mode detecting signal (VR) = L in the step S104 (NO), the processing advances to step S140. In step S140, in response to the detecting signals of the low-level contact mode detecting signal (VC) = H and the low-level wireless mode detecting signal (VR) = H, the combination card 1 falls into a state of no power source. Thus, the combination card 1 is recognized to be inactive, that is, irregular. Accordingly, the processing is terminated.(Step141-END)

If the wireless mode detecting signal (VR) is judged to be the high-level wireless mode detecting signal (VR) = H in step S104(YES), the processing advances to step S130. In step S130, in response to the detecting signals of the low-level contact mode detecting signal (VC) = L and the high-level wireless mode detecting signal (VR) = H, the switching circuit 17 of the combination card 1 performs switching from the current mode to the wireless mode with respect to CPU 11. Thus, the CPU 11 performs data processing according to the processing program in the wireless mode, which is stored in the ROM 12. Each of the respective circuit blocks 12, 13, 14, 18, 19,... performs a processing operation in the wireless mode.

In step S131, the encoder circuit 19 of the combination card 1 encodes ID data held in the EEPROM 14 of the combination card 1. Then, the combination card 1 transmits the encoded ID data to the wireless reader/writer 21 via the wireless I/F 16 and the wireless antenna terminal 3.

In step S132, upon reception of the encoded ID data from the combination card 1, the wireless reader/writer 21 decodes the encoded ID data.

Then, in step S133, the wireless reader/writer 21 judges whether or not the decoded ID data is already registered ID data.

If the decoded ID data is judged not to be previously registered ID data in step S133(NO), the processing advances to step S135. In the step S135, by ringing a buzzer while keeping the gate of the sub entrance 51 locked, the wireless reader/writer 21 informs that the decoded ID data is irregular ID data.

If the decoded ID data is judged to be previously registered ID data in step S133(YES), the processing advances to step S134. In the step S134, the wireless reader/writer 21 unlocks the gate of the sub entrance 51.

As described above, according to the method of using the combination card of the first embodiment of the present invention, the communication systems of the combination card can be separately used according to importance of security, importance of shortening of communication processing time, importance of easy communication actions, frequency of the communication actions and the like. In the above embodiment, the ID number is identification number represent, for example, one of account number, credit number, security number, PIN number and employee number.

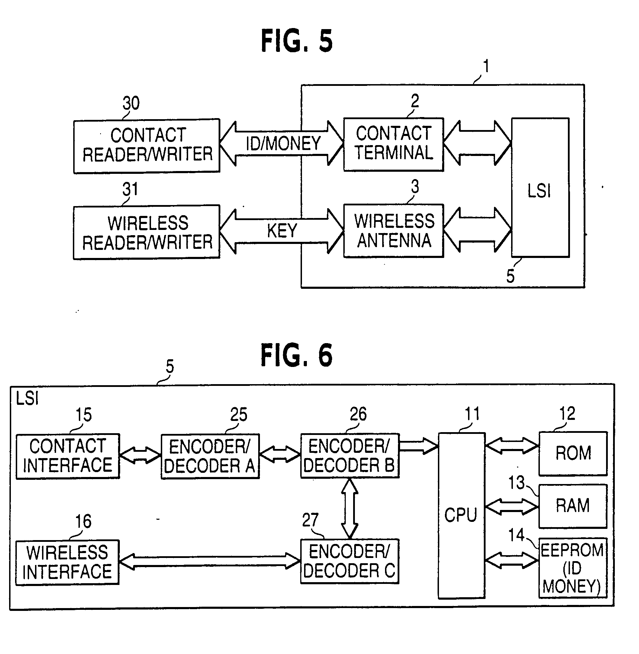

Fig. 5 shows an arrangement of a combination card 1 according to a second embodiment of the present invention. As shown in Fig. 5, on the combination card 1, a contact terminal 2, a wireless antenna terminal 3 and a LSI chip 5 are mounted. Although not shown in the drawing, contact terminal 2 is composed of respective external terminals (electrodes) such as a clock (CLOCK) terminal, a reset (RESET) terminal, a power source (VDD) terminal, a ground (GND) terminal and an input/output (I/O) terminal. Contact terminal 2 allows transmission/reception of various types of data by directly contacting those external terminals with a contact reader/writer 30. The wireless antenna terminal 3 is for executing transmission/reception of data with a wireless reader/writer 31, and for obtaining power from the wireless reader/writer 31.

Fig. 6 shows an arrangement of the LSI chip 5 for a combination card according to the second embodiment of the present invention. As shown in Fig. 6, compared with Fig. 2 described in connection with the first embodiment, the LSI chip 5 for a combination card according to the second embodiment of the present invention is different from the one shown in Fig. 2 in that the LSI chip 5 for a combination card includes encoder/decoder circuit 25, encoder/decoder circuit 26 and encoder/decoder circuit 27. Furthermore, the LSI chip 5 for a combination card shown in Fig. 6 is different from the LSI chip 4 for a combination card according to the first embodiment in also that the LSI chip 5 for a combination card does not include the switching circuit 17, the decoder circuit 18 and the encoder circuit 19. Hereinafter, description will be made only for the differences between the LSI chip 5 for a combination card and the LSI chip 4 for a combination card according to the first embodiment of the present invention.

As shown in Fig. 6, the LSI chip 5 according to the second embodiment has: a contact-type interface 15 for outputting predetermined encoded data to the encoder/decoder circuit A25 when the predetermined encoded data is input to the combination card 1 via the contact terminal 2 similar to the first embodiment; and a wireless interface 16 for outputting encoded key data to encoder/decoder circuit 27 when encoded key data is input to the combination card 1 via the wireless antenna terminal 3. Furthermore, LSI chip 5 according to the second embodiment includes: the encoder/decoder circuit 25 connected to the contact interface 15, which is for decoding various data obtained by the contact reader/writer 30 and for encoding various data which is output by encoder/decoder circuit 26; encoder/decoder circuit 26 connected to encoder/decoder circuits 25 and 27, which is for encoding/decoding various data by use of key data obtained by the wireless reader/writer 31; and the encoder/decoder circuit C27 connected to the wireless I/F 16, which is for decoding/encoding the key data obtained by the wireless reader/writer 31. The encoder/decoder circuit A25 decodes the predetermined encoded data output from the contact I/F 15, and encodes predetermined data output from the encoder/decoder circuit B26. The encoder/decoder circuit B26 encodes predetermined data by use of the key data, and decodes the predetermined data encoded by use of the key data. The encoder/decoder circuit C27 decodes the encoded key data output from the wireless interface 16, and outputs the decoded key data to a second encoder/decoder circuit.

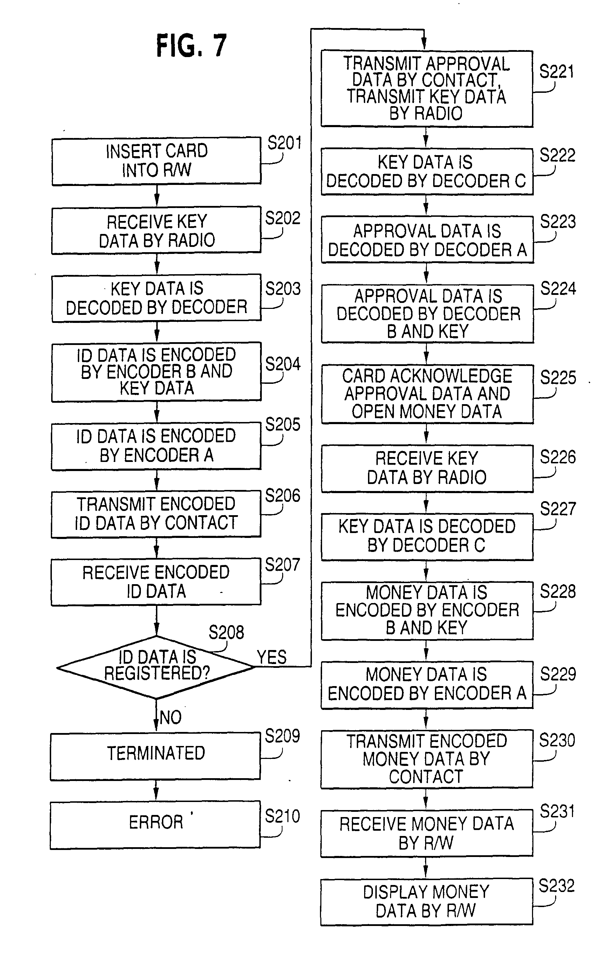

Next, a description of a method of using the combination card according to the second embodiment of the present invention with reference to Fig. 7. is given the description will be made for the case of performing authentication of the combination card by using both of the contact reader/writer 30 and the wireless reader/writer 31 in the method of using the combination card according to the second embodiment. Herein, various data such as money data and ID data is encoded/decoded by using the key data and is transmitted/received by a contact mode. Then, the key data used in the encoding/decoding is encoded and transmitted/received by a wireless mode.

In step S201, a user first inserts the combination card 1 into the contact reader/writer 30.

Subsequently, in step S202, the combination card 1 receives key data for encoding/decoding from the wireless reader/writer 31 via the wireless antenna terminal 3 and the wireless I/F 16.

In step S203, an encoder/decoder circuit 27 of the combination card 1 decodes the received key data for encoding/decoding and outputs the decoded key data to an encoder/decoder circuit 26.

In step S204, by use of the key data output from the encoder/decoder circuit 27, the encoder/decoder circuit 26 of the combination card 1 encodes ID data held in an EEPROM 14 of the combination card 1, and then outputs the encoded ID data to an encoder/decoder circuit 25.

In step S205, the encoder/decoder circuit 25 of the combination card 1 further encodes the encoded ID data output from the encoder/decoder circuit 26. In other words, the encoder/decoder circuit 27 improves a security level by double encoding the ID data.

In step S206, the combination card 1 transmits the double-encoded ID data to the contact reader/writer 30 via the contact I/F 15 and contact terminal 2.

In step S207, upon reception of the encoded ID data from the combination card 1, the contact reader/writer 30 decodes the encoded ID data.

In step S208, the contact reader/writer 30 judges whether or not the decoded ID data is already registered ID data.

If the decoded ID data is judged not to be the already registered ID data in the step S208, processing advances to step S209. In the step S209, the contact reader/writer 30 terminates communication processing.

Then, in step S210, the contact reader/writer 30 notifies the user by displaying "Error" and the like.

Meanwhile, if the decoded ID data is judged to be the previously registered ID data in step S208, the processing advances to step S221. In the step S221, the contact reader/writer 30 encodes certification data and transmits the encoded certification data to the combination card 1 while the wireless reader/writer 31 encodes key data for encoding/decoding and transmits the encoded key data to the combination card 1. The certification data transmitted from the contact reader/writer 30 is input to the encoder/decoder circuit A via the contact terminal 2 of the combination card 1 and the contact I/F 15. Meanwhile, the key data for encoding/decoding transmitted from the wireless reader/writer 31 is input to the encoder/decoder circuit C via the wireless antenna terminal 3 of the combination card 1 and the wireless I/F 16. Note that the certification data transmitted herein is the one which has been already encoded by the contact reader/writer 30. The encoded certification data is the one obtained by further encoding the certification data previously encoded by the key data transmitted by the wireless reader/writer. In other words, the certification data has been double-encoded. In addition, the key data transmitted herein is the one previously encoded by the wireless reader/writer 31.

In step S222, the encoder/decoder circuit 27 of the combination card 1 decodes the key data for encoding/decoding received from the wireless reader/writer 31, and outputs the decoded key data to the encoder/decoder circuit 26.

In step S223, encoder/decoder circuit 25 of the combination card 1 decodes the certification data received from the contact reader/writer 30, and outputs the decoded certification data to the encoder/decoder circuit 26.

Next, in step S224, by use of the key data output from encoder/decoder circuit 27, the encoder/decoder circuit 26 of the combination card 1 decodes the certification data output from the encoder/decoder circuit A25

In step S225, the combination card 1 starts to read money data held in the EEPROM 14 when confirmed that certification thereof is OK is received based on the decoded certification data.

In step S226, the combination card 1 receives the key data for encoding/decoding from the wireless reader/writer 31 via the wireless antenna terminal 3 and the wireless I/F 16.

In step S227, the encoder/decoder circuit 27 of combination card 1 decodes the received key data for encoding/decoding, and outputs the decoded key data to the encoder/decoder circuit 26.

In step S228, by use of the key data output from the encoder/decoder circuit 27, encoder/decoder circuit 26 of combination card 1 encodes the money data held in the EEPROM 14 of the combination card 1. Then, the encoded money data is output to the encoder/decoder circuit 25.

In step S229, the encoder/decoder circuit 25 of the combination card 1 further encodes the encoded money data output from the encoder/decoder circuit B. Specifically, the encoder/decoder circuit 25 improves the security level of double encoding the money data.

In step S230, the combination card 1 transmits double-encoded money data to contact reader/writer 30 via the contact interface 15 and contact terminal 2.

In step S231, upon reception of the encoded money data from the combination card 1, the contact reader/writer 30 decodes the encoded money data.

In step S232, the contact reader/writer 30 displays the decoded money data and terminates the processing.

In the embodiments of the present invention, in the gate system for a building and the like, certification is performed by the contact mode at the main entrance of the building, and by the wireless mode at the sub entrance in the building. However, the separate use of these wireless and contact modes is applicable other than the above. For example, in purchasing (issuing) of tickets for movies, amusement parks, airplanes and the like by use of the combination card, charging therefor may be performed by the contact mode. In entering gates of movie theaters, amusement parks, airports and the like, opening/closing of the gates may be performed by certifying the combination card by the wireless mode. In addition, in entering a station yard of a railroad and the like by use of a commutation ticket and the like, opening/closing of a gate thereof may be performed by certifying the commutation ticket by the wireless mode. In purchasing commercial products at a station kiosk and the like, charging therefor may be performed by certification by the contact mode. Furthermore, the communication systems (the contact mode and the wireless mode) can be separately used according to a level of importance of a security (high or low) as described below. Specifically, when the combination card is used as a banking card, a convenience store card or the like, charging in a small-valve transaction may be performed by certifying the combination card by the wireless mode, and charging in a large-valve transaction may be performed by certifying the combination card by the contact mode. In the above embodiment, the ID number is identification number represent, for example, one of account number, credit number ,security number and PIN number.

As described above, according to the method of using the combination card of the second embodiment of the present invention, since the transmitted/received data is encoded by performing the communications by use of both of the contact mode and the wireless mode, communications with the high security level can be performed.

The present invention has been described based on the foregoing embodiments. However, the explanation and drawings constituting a part of this disclosure should not be understood as setting limitations to this invention. To those skilled in the art, various alternative embodiments, examples and operational technologies will become apparent based on this disclosure.

As described above, the present invention includes various embodiments and the like which are not described herein, as a matter of course. Therefore, a technological scope of the present invention is defined only by items specific to the invention according to claims pertinent based on the foregoing description.

## Claims

1. A semiconductor integrated circuit comprising:
a first interface circuit to output a low-level contact mode signal when no power supply voltage is supplied, -and to output a high-level contact mode signal when a power supply voltage is supplied;
a second interface circuit to output a low-level wireless mode signal when no power supply voltage is supplied, and to output a high-level wireless mode signal when a power supply voltage is supplied;
a switching circuit to switch a communication mode to a contact mode in the case of the high-level contact mode signal and the low-level raidio mode detecting signal, and to switch the communication mode to a wireless mode in the case of the low-level contact mode signal and the high-level wireless mode signal;
a CPU to execute a processing program of the wireless mode in the wireless mode and to execute a processing program of the contact mode in the contact mode, according to the communication mode of the switching circuit;
a memory circuit to store predetermined data; and
an encoder circuit to encode the predetermined data held in the memory according to the wireless mode or the contact mode of the switching circuit.

2. A semiconductor integrated circuit comprising, according to claim 1 wherein the first interface circuit is contact type circuit ,and receive/transmit data via contact reader/writer.

3. A semiconductor integrated circuit comprising, according to claim 1 wherein the second interface circuit is wireless type circuit, and receive/transmit data via wireless communication.

4. A semiconductor integrated circuit comprising, according to claim wherein the first interface circuit out put the low-level contact mode signal or high-level contact mode signal when the first interface circuit receive a signal from a contact type reader/writer.

5. A semiconductor integrated circuit comprising, according to claim 1 wherein the second interface circuit output the low-level wireless mode signal or high-level wireless mode signal when the second interface circuit receive a signal from a non-contact type reader/writer.

6. Semiconductor integrated circuit comprising:
a first interface to output predetermined encoded data when the predetermined encoded data is input;
a second interface to output encoded key data when the encoded key data is input;
a first encoder/decoder circuit being coupled to the first interface that decode the predetermined encoded data output from the first interface;
a second encoder/decoder circuit being coupled to the second interface that decode encoded key data output from the wireless interface and output decoded key data; and
a third encoder/decoder circuit being coupled to the first encoder/decoder circuit, second encoder/decoder circuit and CPU that encode predetermined data by use of the decoded key data or that decode the predetermined data encoded by use of the decoded key data.

7. The semiconductor circuit according to claim 6, wherein the first interface is contact type interface receiving data from a contact reader/writer.

8. The semiconductor circuit according to claim 6, wherein the first interface is wireless type interface receiving data from a wireless reader/writer.

9. A memory card comprising:
a contact terminal to perform transmission/reception of first data, by electrically contacting with a contact reader/writer;
a wireless antenna terminal to perform transmission/reception of second data by wirelessly communicating with a WIRELESS reader/writer;
an semiconductor integrated circuit to generate a contact mode detecting signal when a power supply voltage is supplied from the contact terminal, to generating wireless mode detecting signal when a power supply voltage is supplied from the wireless antenna terminal, and to switch a communication mode according to the contact mode detecting signal and the wireless mode detecting signal.

10. A memory card comprising:
a contact terminal to perform transmission/reception of predetermined encoded data, by electrically contacting with a contact reader/writer;
a wireless antenna terminal to perform transmission/reception of key data by wirelessly communicating with a wireless reader/writer;
an integrated circuit to decode the predetermined encoded data input from the contact terminal, to decode encoded key data input from the wireless antenna terminal, and to encode predetermined data by use of the decoded key data or to decode the predetermined data encoded by the key data.

11. A method of using a memory card comprising:
outputting a contact mode detecting signal to a switching circuit when a power supply voltage is supplied to the memory card from a contact type reader/writer via a contact terminal;
outputting a wireless mode detecting signal to the switching circuit when a power supply voltage is supplied to the memory card from a wireless type reader/writer via a wireless antenna terminal;
encoding ID data held in a memory in the case of the contact mode detecting signal, and transmitting the encoded ID data to the contact type reader/writer via the contact terminal;
decoding the received encoded ID data, judging whether or not the decoded ID data is registered ID data, and performing a predetermined operation by the contact type reader/writer when the decoded ID is the registered ID;
encoding the ID data held in the memory in the case of a wireless mode detecting signal, and transmitting the encoded ID data to the wireless type reader/writer via the wireless antenna terminal; and
decoding the received encoded ID data, judging whether or not the decoded ID data is registered ID data and performing a predetermined operation by the wireless type reader/writer when the encoded ID is the registered ID.

12. A method of using a memory card comprising:
outputting a high-level contact mode detecting signal to a switching circuit when a power supply voltage is supplied to the memory card from a contact reader/writer via a contact terminal;
outputting a low-level contact mode detecting signal to a switching circuit when a power supply voltage is not supplied to the memory card from a contact reader/writer via a contact terminal;
outputting a high-level wireless mode detecting signal to the switching circuit when a power supply voltage is supplied to the memory card from a wireless type reader/writer via a wireless antenna terminal;
outputting a low-level wireless mode detecting signal to the switching circuit when a power supply voltage is not supplied to the memory card from a wireless type reader/writer via a wireless antenna terminal;
encoding ID data held in a memory in the case of the high-level contact mode detecting signal and a low-level wireless mode detecting signal, and transmitting the encoded ID data to the contact type reader/writer via the contact terminal;
decoding the received encoded the ID data, judging whether or not the decoded ID data is the registered ID data and performing a predetermined operation by the contact type reader/writer; when the encoded ID data is the registered ID data;
encoding the ID data held in the memory in the case of a low-level contact mode detecting signal and the high-level wireless mode detecting signal, and transmitting the encoded the ID data to the wireless type reader/writer via the wireless antenna terminal; and
decoding received the encoded ID data, judging whether or not the decoded ID data is the registered ID data and performing a predetermined operation by the wireless type reader/writer when the encoded ID data is registered ID data.

13. The method of using a memory card according to claim 11 or 12, wherein the memory card is combination of contact type circuit and wireless type circuit.

14. The method of using a memory card according to claim 11 or 12,where in the ID number is identification number represent one of account number, credit number and security number.

15. A method of using a memory card comprising:
decoding encoded key data received via a wireless type reader/writer;
encoding ID data held in a memory by use of the decoded key data, and transmitting the encoded ID data to a contact type reader/writer;
decoding the ID data by the contact type reader/writer;
transmitting certification data, obtained by further encoding certification data encoded by key data, to the memory card by the contact type reader/writer in the case where the decoded ID data is registered ID data" and transmitting the encoded key data to the memory card by the wireless type reader/writer;
decoding the encoded key data received from the wireless type reader/writer, and decoding the certification data obtained by further encoding the certification data encoded by the key data received from the contact type reader/writer;
decoding the decoded certification data by use of the decoded key data;
decoding the key data received from the wireless type reader/writer when certification of the combination card is confirmed based on the decoded certification data,;
encoding predetermined data held in the memory by use of the decoded key data, further encoding the encoded predetermined data and transmitting the encoded predetermined data to the contact type reader/writer; and
decoding the encoded predetermined data received, and performing an predetermined operation by the contact reader/writer.

16. The method of using a memory card according to claim 15, wherein the memory card is combination of contact type circuit and wireless type circuit.

17. The method of using a memory card according to claim 15, the ID number is identification number represent one of an account number, credit number and security number.
